# EUROPEAN PATENT APPLICATION

(11) **EP 4 790 287 A1**
(43) Date of publication of application: **12.08.2026**
(21) Application number: 24873891.6
(22) Date of filing: 12.07.2024
(51) Int. Cl.: F16K 31/04

(54) **MOTORIZED VALVE**

(30) Priority: 04.10.2023 JP 2023172620
(71) Applicant: Fujikoki Corporation, Tokyo 158-0082 (JP)
(72) Inventor: YAZAWA, Masashi, Tokyo 158-0082 (JP); OE, Yuma, Tokyo 158-0082 (JP)
(74) Representative: Ter Meer Steinmeister & Partner
(86) International application number: PCT/JP2024/025348
(87) International publication number: WO 2025/074706

(57) **Abstract**

Provided is a motorized valve that is relatively inexpensive and that is stably usable for a long time. The motorized valve includes a valve main body including a valve seat, a valve chamber, and an orifice passage, a valve shaft configured to be rotationally driven by a motor and be displaced in an axial direction, a valve holder held by the valve shaft, a first valve element that is fixed to the valve holder and that includes a through hole, a second valve element that is disposed between the valve shaft and the first valve element, an elastic body configured to urge the second valve element in a direction away from the first valve element, and a seal holder including a holder base disposed in the valve main body, wherein a sealing is provided between an outer periphery of the holder base and an inner periphery of the valve main body, wherein an annular sealing body is disposed between an inner periphery of the holder base and an outer periphery of the valve holder, wherein the orifice passage and an inner space of the valve main body are configured to communicate via the through hole in a state where the first valve element is seated on the valve seat inside the valve chamber, and wherein the through hole is closed in a state where the second valve element abuts on the first valve element.

## Description

### [Technical Field]

The present invention relates to motorized valves.

### [Background Art]

Motorized valves of a motor-driven type are equipped with a screw mechanism in which a male screw portion of a valve shaft which is rotationally driven by a stepping motor is screwed onto a female screw hole disposed on a valve main body. Using this screw mechanism, the valve shaft is rotated about an axis while being displaced in the axial direction, by which a gap between a valve element and a valve seat is increased/decreased to thereby control flow rate of the valve.

For example, Patent Literature 1 discloses a motorized valve having a valve seat with a relatively large inner diameter to ensure the flow rate when the valve is opened. In such a motorized valve, there is a need to suppress leakage of fluid from a valve chamber to a low pressure-side piping at two locations, one between a valve seat and a valve element seated on the valve seat, and the other one between a base member fixed to a valve main body and an O-ring providing a sealing between the valve element.

### [Citation List]

### [Patent Literature]

[PTL 1] Japanese Patent Application Laid-Open Publication No. 2019-65898

### [Summary of Invention]

### [Technical Problem]

In order to enhance the sealing between the base member and the valve element, it is necessary to enhance a contact pressure of the O-ring, which may lead to drawbacks such as deterioration of slidability or increase of load on the motor. Further, in order for the O-ring to be used for a long time, it is preferable to select a material that is not easily deteriorated by heat, but there is a drawback that the freedom of selection of material is limited thereby.

The present invention aims at providing a motorized valve that is relatively inexpensive and that is stably usable for a long time.

### [Solution to Problem]

A motorized valve according to the present invention includes:
a valve main body including a valve seat, a valve chamber, and an orifice passage;
a valve shaft configured to be rotationally driven by a motor and be displaced in an axial direction;
a valve holder held by the valve shaft;
a first valve element that is fixed to the valve holder and that includes a through hole;
a second valve element that is disposed between the valve shaft and the first valve element;
an elastic body configured to urge the second valve element in a direction away from the first valve element; and
a seal holder including a holder base disposed in the valve main body,
wherein a sealing is provided between an outer periphery of the holder base and an inner periphery of the valve main body,
wherein an annular sealing body is disposed between an inner periphery of the holder base and an outer periphery of the valve holder,
wherein the orifice passage and an inner space of the valve main body are configured to communicate via the through hole in a state where the first valve element is seated on the valve seat inside the valve chamber, and
wherein the through hole is closed in a state where the second valve element abuts on the first valve element.

### [Advantageous Effects of Invention]

According to the present invention, a motorized valve that is relatively inexpensive and that may be used stably for a long time may be provided.

### [Brief Description of Drawings]

[FIG. 1] FIG. 1 is a vertical cross-sectional view of a motorized valve according to an embodiment of the present invention, illustrating a valve closed state.
[FIG. 2] FIG. 2 is a vertical cross-sectional view of the motorized valve according to an embodiment of the present invention, illustrating a valve half-opened state.
[FIG. 3] FIG. 3 is a vertical cross-sectional view of the motorized valve according to an embodiment of the present invention, illustrating a valve completely opened state.
[FIG. 4] FIG. 4 is an enlarged view of a vicinity of a valve chamber of the motorized valve illustrated in FIG. 3.

### [Description of Embodiments]

An embodiment according to the present invention will be described below with reference to the drawings.

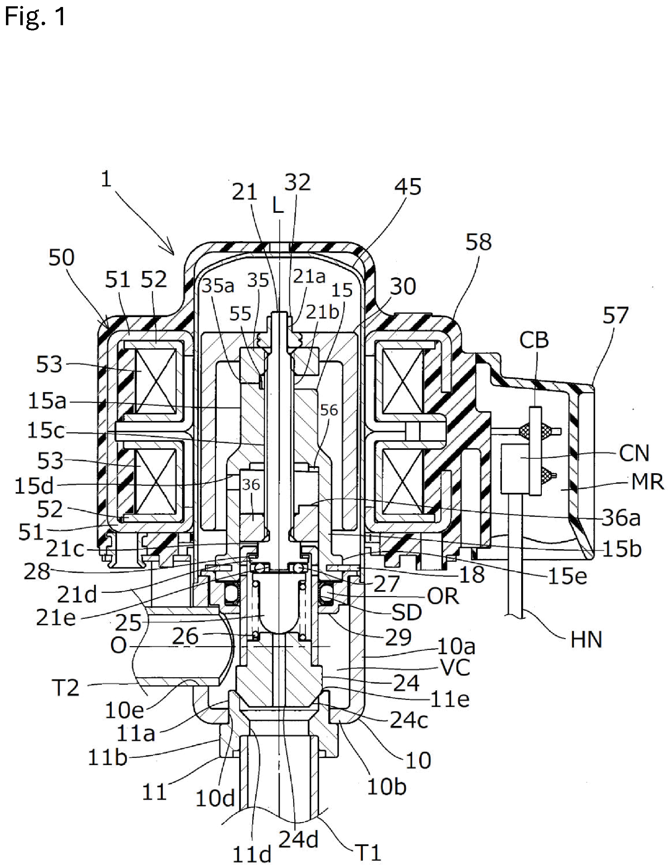

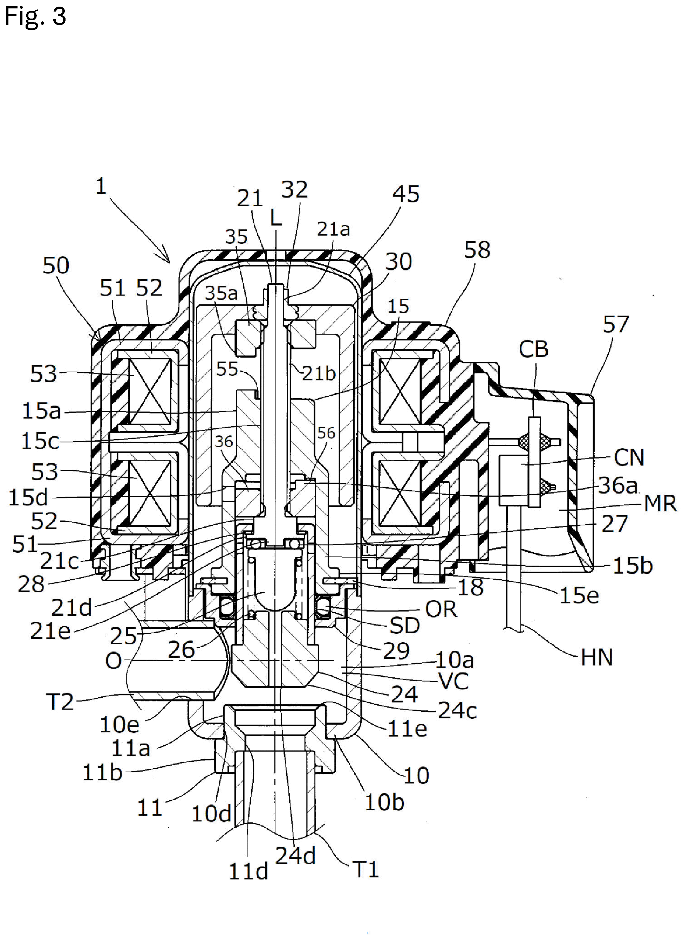

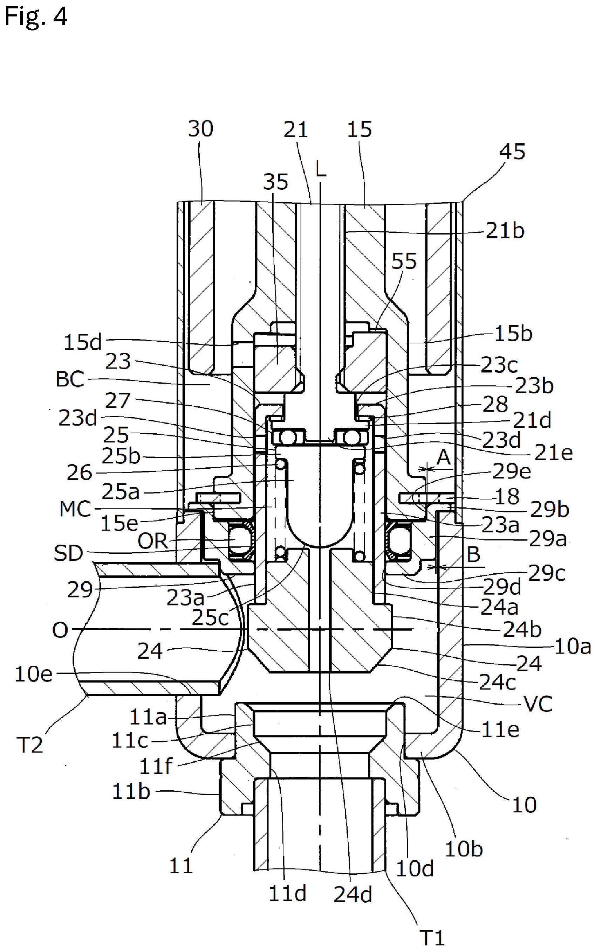

FIGS. 1 to 3 are each a vertical cross-sectional view illustrating a motorized valve 1 according to the embodiment of the present invention. FIG. 4 is an enlarge view of a vicinity of the valve camber of the motorized valve 1 illustrated in FIG. 3. In the following description, an upper direction refers to a rotor side with respect to a valve seat, and a lower direction refers to a valve seat side with respect to the rotor.

### (Configuration of Motorized Valve)

The motorized valve 1 includes a valve main body 10 having a cylindrical shape with a bottom with an upper end opened, a can 45 having a cylindrical shape with a top and having its lower end portion airtightly joined by welding to an upper end surface of the valve main body 10, a guide stem 15 fixed to an inner side of the valve main body 10, a valve shaft 21 disposed inside the guide stem 15, a rotor 30 connected and fixed to the valve shaft 21 so as to rotate integrally therewith, and a stator 50 externally fit to an outer periphery of the can 45. An axis of the motorized valve 1 is referred to as L.

The valve main body 10 is formed by consecutively connecting a hollow cylindrical portion 10a and a bottom wall portion 10b. The hollow cylindrical portion 10a and the bottom wall portion 10b have approximately equivalent wall thicknesses. An inner side of the hollow cylindrical portion 10a constitutes a valve chamber VC.

A round opening 10d is formed at a center of the bottom wall portion 10b, and a valve seat member 11 is fixed to the opening 10d by brazing, wherein according to the present embodiment, the valve seat member 11 constitutes a portion of the valve main body 10.

The valve seat member 11 is formed by consecutively connecting a reduced-diameter cylindrical portion 11a and an expanded-diameter cylindrical portion 11b, which are respectively hollow, in an axis L direction. The reduced-diameter cylindrical portion 11a is fit to and brazed on the opening 10d. An end portion of a first piping T1 is inserted and fit to an inner periphery of the expanded-diameter cylindrical portion 11b, which is connected thereto by brazing.

In FIG. 4, the valve seat member 11 includes, from an upper end side, an upper opening portion 11c having a cylindrical shape, an intermediate opening portion 11f having a tapered shape that reduces in diameter toward the lower direction, and an orifice passage 11d having a cylindrical shape with a smaller diameter than the upper opening portion 11c. The first piping T1 is disposed to abut against a stepped portion immediately below the orifice passage 11d, and an inner diameter of the first piping T1 is greater than an inner diameter of the orifice passage 11d. A valve seat 11e having a tapered shape that expands in diameter toward the upper direction is formed on an inner periphery at an upper end of the upper opening portion 11c.

In FIGs. 1 to 3, an inlet opening 10e is formed on the hollow cylindrical portion 10a of the valve main body 10, and an end portion of a second piping T2 is inserted to the inlet opening 10e, which is connected thereto by brazing. An axis of the inlet opening 10e is referred to as O. The axis O is orthogonal to the axis L.

A lower end of the can 45 is abutted against an upper end of the valve main body 10 and joined thereto by welding, such that the valve main body 10 and the can 45 are integrated in a sealed manner. Further, a collar-shaped disc 18 is disposed at a lower end on an inner side of the can 45 at an upper end of the valve main body 10. Preferably, the collar-shaped disc 18 is welded across the entire periphery simultaneously when welding the valve main body 10 and the can 45.

The stator 50 is formed by disposing a yoke 51, a bobbin 52, and a stator coil 53 on an outer side of the can 45, and an outer periphery thereof is covered by a resin mold cover 58. In the present embodiment, the resin mold cover 58 covers the entirety of the stator 50 including the upper portion of the can 45, but alternatively, the cover may cover only the circumference of the yoke 51. The rotor 30 and the stator 50 constitute a stepping motor.

The stator coil 53 is connected via a circuit board CB, a connector CN, and a wiring HN to an external power supply circuit (not shown). The circuit board CB and the connector CN are covered by a different resin cover 57. By energizing and exciting the stator coil 53, the rotor 30 disposed inside the can 45 may be rotated about the axis L. A mold resin MR is filled in the resin cover 57.

The guide stem 15 disposed on an inner side of the rotor 30 is formed by consecutively connecting a main body 15a having a solid cylindrical shape and a hollow cylindrical portion 15b. A female screw hole, i.e., female screw portion, 15c is formed in a manner passing through a center of the main body 15a in the axis L direction. The collar-shaped disc 18 is fixed to an outer periphery groove of a lower end-side expanded diameter portion 15e of the hollow cylindrical portion 15b, and by having the collar-shaped disc 18 welded to the upper end of the valve main body 10 as described above, the guide stem 15 is fixed to the valve main body 10. A pressure equalizing hole 15d is formed by passing through the inner and outer peripheries of the hollow cylindrical portion 15b.

Further, in order to set an origin position for control of the rotor 30 and the valve shaft 21, a valve-closing fixing stopper 55 having a rectangular cross section is disposed to protrude upward from an upper surface of the main body 15a of the guide stem 15, and a valve-opening fixing stopper 56 having a rectangular cross section is disposed to protrude downward from a lower surface of the main body 15a of the guide stem 15. The origin position for control of the rotor 30 and the valve shaft 21 refers to a position where a valve-closing movable stopper 35 is abutted and locked on the valve-closing fixing stopper 55, and where the rotor 30 and the valve shaft 21 have reached a lowermost descended position.

The valve shaft 21 is formed by consecutively connecting a small diameter portion 21a to which an annular connecting body 32 mounted to the rotor 30 is externally fit, a male screw portion 21b screwed onto the female screw hole 15c of the guide stem 15, a valve shaft cylindrical portion 21c formed below the male screw portion 21b, an outer flange portion 21d that extends outward in a radial direction from a lower end of the valve shaft cylindrical portion 21c, and a small cylindrical portion 21e that protrudes downward from the lower end of the valve shaft cylindrical portion 21c. An outer diameter of the small cylindrical portion 21e is smaller than an outer diameter of the valve shaft cylindrical portion 21c.

The valve-closing movable stopper 35 is screwed onto an upper end portion of the male screw portion 21b in the valve shaft 21, and locked to a lower surface of an upper wall of the rotor 30. A stopper portion 35a having a rectangular cross section is formed on a lower surface of the valve-closing movable stopper 35.

Further, a valve-opening movable stopper 36 is screwed onto a lower end portion of the male screw portion 21b of the valve shaft 21 and locked to an upper surface of a valve holder 23. A stopper portion 36a having a rectangular cross section is formed on an upper surface of the valve-opening movable stopper 36.

In FIG. 4, the valve holder 23 is mounted to the lower end of the valve shaft 21. The valve holder 23 is formed by consecutively connecting an outer wall portion 23a and an inner flange portion 23b extending radially inward from the upper end of the outer wall portion 23a. The outer wall portion 23a has an inner periphery with a larger diameter than the outer flange portion 21d, and the inner flange portion 23b has an inner periphery with a smaller diameter than the outer flange portion 21d. A round opening 23c that fits slidably to the valve shaft cylindrical portion 21c is formed at a center of the inner flange portion 23b. The outer periphery of the outer wall portion 23a is fit slidably to an inner periphery of the hollow cylindrical portion 15b of the guide stem 15. A plurality of communication holes 23d disposed along the circumferential direction and passing through in the radial direction are formed neat the upper end of the outer wall portion 23a.

A lower end of the outer wall portion 23a is connected to a first valve element, also simply referred to as valve element, 24. The first valve element 24 is formed by consecutively connecting an upper cylindrical portion 24a which is fit to the outer wall portion 23a and fixed thereto by press-fitting or welding, and a lower cylindrical portion 24b, having a tapered portion 24c that reduces in diameter toward the lower direction is formed on a lower end of the lower cylindrical portion 24b. Further, a through hole 24d formed to pass trough in the upper and lower directions along the axis L is formed on the first valve element 24. The through hole 24d communicates a valve shaft-side space, i.e., an intermediate chamber MC in the upper direction of the first valve element 24, and an opposite valve-shaft side space, that is, a lower direction space of the first valve element 24 that leads to the orifice passage 11d, interposing a seal holder 29 described later.

A second valve element 25 is disposed on an inner side of the valve holder 23. The second valve element 25 is formed of metal, such as SUS, and includes a valve element base portion 25a having an approximately cylindrical shape, a valve element flange portion 25b that extends radially outward from an upper end of the valve element base portion 25a, and a hemispherical portion 25c that is formed on a lower end of the valve element base portion 25a and that has a spherical surface.

A coil spring, i.e., elastic body, 26 has its upper end abut on a lower end of the valve element flange portion 25b, and has its lower end abut on an upper surface of the first valve element 24, the coil spring urging the second valve element 25 in a direction away from the first valve element 24.

An annular thrust bearing 27 is disposed between the second valve element 25 and the valve shaft 21. The thrust bearing 27 is disposed around the small cylindrical portion 21e of the valve shaft 21, abutting on an upper surface of the second valve element 25 and a lower surface of the outer flange portion 21d, and enabling the second valve element 25 and the valve shaft 21 to relatively rotate with a low friction.

Further, a washer 28, which is an annular plate, is disposed between the outer flange portion 21d of the valve shaft 21 and the inner flange portion 23b of the valve holder 23. The washer 28 also enables the outer flange portion 21d and the inner flange portion 23b to relatively rotate with a low friction.

The seal holder 29 is disposed between the valve holder 23 and the hollow cylindrical portion 10a of the valve main body 10. The seal holder 29 is formed by consecutively connecting an annular holder base 29a, an annular holder flange portion 29b that extends radially outward from an upper end of the holder base 29a, and a round bottom wall portion 29c that shifts from the lower end of the holder base 29a and that extends radially outward, while being connected via a small cylindrical portion. An annular recessed portion 29e is formed coaxially on the upper end of the holder base 29, i.e., on a radially inward side of the holder flange portion 29b. The outer wall portion 23a of the valve holder 23 is slidably fit to a holder opening 29d that passes through the bottom wall portion 29c, and the outer wall portion 23a protrudes to the lower direction from the valve holder 23.

The holder flange portion 29b is nipped and disposed between the upper end of the hollow cylindrical portion 10a and the lower surface of the collar-shaped disc 18 with a gap formed between a radially inward side of the inner periphery of the end portion of the can 45, and welded thereto as described later. An outer periphery of the lower end-side expanded diameter portion 15e of the guide stem 15 is disposed to face an inner periphery of the holder flange portion 29b. Further, a tip of the second piping T2 is disposed by being abutted on an outer periphery of the bottom wall portion 29c, by which the second piping T2 may be positioned when inserting.

An O-ring OR and a sliding member SD are disposed on an inner periphery of the holder base 29a sandwiched between the lower end of the guide stem 15 and the bottom wall portion 29c. The O-ring OR and the sliding member SD constitute an annular sealing body. The sliding member SD is a flexible tubular body formed of a low friction material such as PTFE having a lower friction coefficient than the O-ring OR, and is disposed between the O-ring OR and the outer wall portion 23a. Therefore, the holder base 29a and the outer wall portion 23a are relatively displaceable in the axis L direction while allowing the O-ring OR and the sliding member SD to seal fluid. It may also be possible to dispose only the O-ring OR without disposing the sliding member SD.

An inner space of the motorized valve 1, i.e., space surrounded by the can 45 and the valve main body 10, is partitioned into the valve chamber VC of high pressure, the intermediate chamber MC inside the valve holder 23, and a back pressure chamber BC inside the can 45. The O-ring OR and the sliding member SD provide a sealing between the valve chamber VC and the intermediate chamber MC.

In a state where a gap between an outer periphery of the lower end-side expanded diameter portion, i.e., cylindrical fitting portion, 15e and an inner periphery of the annular recessed portion, i.e., cylindrical fitted portion, 29e is referred to as A, and a gap between an outer periphery of the holder base 29a and an inner periphery of the hollow cylindrical portion 10a of the valve main body 10 is referred to as B, B>A is satisfied.

In the present embodiment, as illustrated in FIGs. 1 to 3, the rotor 30, the valve shaft 21, the valve-opening movable stopper 36, the valve holder 23, the washer 28, the thrust bearing 27, the second valve element 25, the coil spring 26, and the first valve element 24 are relatively displaceable in the axis L direction with respect to the guide stem 15 and the seal holder 29 fixed to the valve main body 10. Further, the valve holder 23 and the first valve element 24 are relatively displaceable in the axis L direction with respect to the valve shaft 21. Further, the second valve element 25 is relatively displaceable in the axis L direction with respect to the valve shaft 21 and the first valve element 24.

### (Assembling Process of Motorized Valve)

An assembling process of the motorized valve 1 will be described. At first, the guide stem 15 having the collar-shaped disc 18 assembled thereto is joined with the seal holder 29 having the O-ring OR and the sliding member SD assembled thereto, by which a first assembly is formed. The seal holder 29 may be welded to the collar-shaped disc 18 at this point, or it may be welded simultaneously as welding the collar-shaped disc 18 onto the valve main body 10. Thereby, sealing is provided between the seal holder 29 and the valve main body 10, that is, the outer periphery of the holder base 29a and the inner periphery of the valve main body 10.

Further, after assembling the washer 28 and the valve holder 23 from the male screw portion 21b side of the valve shaft 21, the valve-opening movable stopper 36 is screwed onto the male screw portion 21b and assembled thereto. Thereafter, the thrust bearing 27, the second valve element 25, and the coil spring 26 are disposed within the valve holder 23, and the first valve element 24 is welded to the lower end of the valve holder 23, by which a second assembly is formed.

The male screw portion 21b of the second assembly formed as described above is screwed onto the female screw hole 15c of the first assembly, then the valve-closing movable stopper 35 is screwed onto the male screw portion 21b protruded from the guide stem 15, and the rotor 30 is assembled thereto, by which a third assembly is formed.

Further, the valve seat member 11 is brazed onto the valve main body 10, then the valve shaft 21 of the third assembly and the valve seat member 11 are coaxially positioned using a jig, while the third assembly is accommodated in the can 45, and the valve main body 10, the can 45, and the collar-shaped disc 18 are fixed to each other by welding. Thereafter, the piping T1 and T2 are brazed, and the stator 50 is attached to the can 45, by which the motorized valve 1 is completed.

According to the present embodiment, as illustrated in FIG. 4, a gap A between the outer periphery of the lower end-side expanded diameter portion 15e and the inner periphery of the annular recessed portion 29e, which is preferably an interference fitting, is smaller than a gap B between the outer periphery of the valve holder 23 and the inner periphery of the hollow cylindrical portion 10a of the valve main body 10. Using the gap B, centering the valve shaft 21 and the valve seat member 11 may be performed by adjusting the position of the valve holder 23 and the first valve element 24 together with the seal holder 29 in a direction orthogonal to the axis. The coaxial property of the guide stem 15 and the seal holder 29 is ensured by the accuracy of machining, such that by disposing the seal holder 29 coaxially to the axis L of the valve main body 10, i.e., the valve seat member 11, the coaxial property of the valve seat 11e and the first valve element 24 may be ensured easily, and fluid leakage may be suppressed.

### (Operation of Motorized Valve)

Next, an operation of the motorized valve 1 will be described in detail.

At first, it is assumed that fluid, i.e., refrigerant, enters through the second piping T2 into the valve chamber VC, and that the motorized valve 1 is in a valve closed state illustrated in FIG. 1. In this state, a lower end of the valve shaft 21 in the descended state presses the upper end of the second valve element 25, such that the second valve element 25 descends against the urging force of the coil spring 26, and the hemispherical portion 25c maintains a state closing the upper end of the through hole 24d. Even if the second valve element 25 is tilted, the hemispherical portion 25c may close the upper end of the through hole 24d appropriately.

Further, since the upper end of the first valve element 24 is pressed by the second valve element 25, the hemispherical portion 25c is seated on the valve seat 11e.

By having the tapered portion 24c seated on the valve seat 11e in the valve closed state, fluid is prevented from flowing out from the valve chamber VC into the first piping T1. Even if fluid is moved from the valve chamber VC to the intermediate chamber MC and the pressure in the intermediate chamber MC is increased, the hemispherical portion 25c closes the upper end of the through hole 24d, such that fluid is suppressed from flowing out from the intermediate chamber MC into the first piping T1. In this state, pressure of the valve chamber VC is applied above the first valve element 24, and pressure of the first piping T1 is applied below the first valve element 24, such that the first valve element 24 is seated stably on the valve seat 11e.

In the valve close state as described above, when pulse power feeding is performed to the stator 50 from an external power supply circuit, the rotor 30 and the valve shaft 21 are rotationally driven in one direction, and in response thereto, the valve shaft 21 and the valve holder 23 elevate while being rotated via a screw feeding mechanism composed of the female screw hole 15c and the male screw portion 21b.

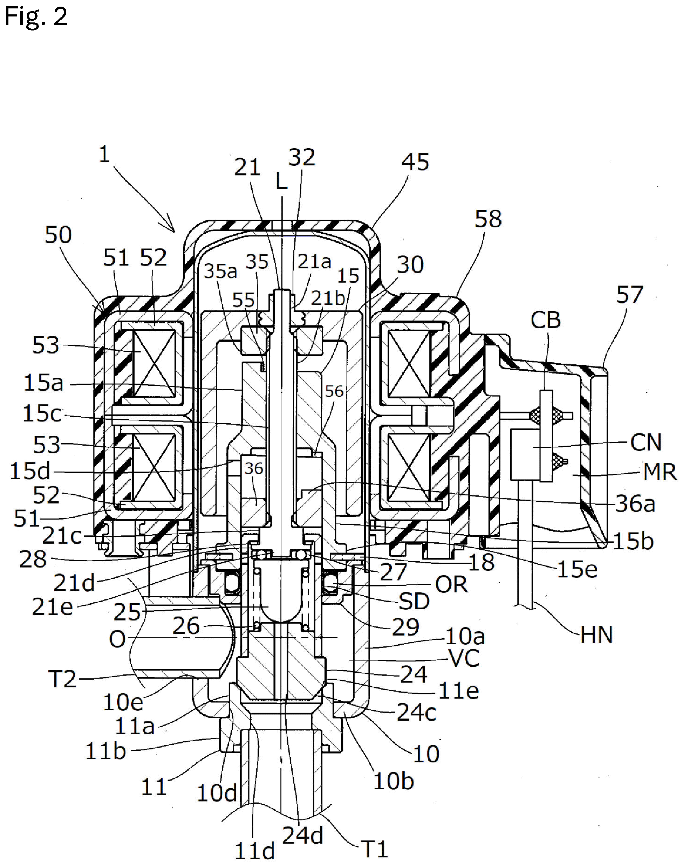

By having the valve shaft 21 elevate, the pressing force that urges the second valve element 25 downward is eliminated, such that as illustrated in FIG. 2, the second valve element 25 moves in a direction away from the first valve element 24 according to the urging force of the coil spring 26. Then, fluid within the intermediate chamber MC flows through the through hole 24d and the orifice passage 11d toward the first piping T1, such that the pressure within the intermediate chamber MC drops to approximate the pressure within the first piping T1. Thereby, pressure above and below the valve seat 11e is balanced, i.e., pressure difference above and below the valve seat 11e is cancelled, such that the first valve element 24 may easily elevate.

Further, the outer flange portion 21d also elevates along with the elevation of the valve shaft 21, such that the inner flange portion 23b is urged upward via the washer 28, and thereby, the valve holder 23 is elevated in a suspended manner, such that the first valve element 24 is moved away from the valve seat 11e, and a valve completely opened state illustrated in FIG. 3 is realized. In this state, the valve holder 23 is elevated while sliding against the sliding member SD urged inward in the radial direction by repulsive force of the O-ring OR, such that wear resistance and sealing property may be ensured for a long time. Further, when the outer flange portion 21d and the inner flange portion 23b relatively rotate, the washer 28 may slide thereagainst and ensure a low friction state.

By having the valve shaft 21 elevate to a predetermined position, the valve-opening movable stopper 36 is abutted on and locked to the valve-opening fixing stopper 56, such that the rotation and elevation of the rotor 30, the valve shaft 21, and the valve holder 23 are stopped forcibly.

By having the first valve element 24 move away from the valve seat 11e, fluid having flown into the valve chamber VC from the second piping T2 flows out via the valve seat 11e and the orifice passage 11d toward the first piping T1. The flow rate of the fluid being flown out is determined according to the gap between the tapered portion 24c and the valve seat 11e.

In this state, the intermediate chamber MC communicates via the through hole 24d with the valve chamber VC, such that the pressure of the intermediate chamber MC becomes approximately equal to the pressure of the valve chamber VC. Further, the intermediate chamber MC communicates via the communication holes 23d of the valve holder 23 and the pressure equalizing hole 15d of the guide stem 15 with the back pressure chamber BC, such that the pressure of the intermediate chamber MC and the pressure of the back pressure chamber BC become approximately equal.

Meanwhile, in the valve completely opened state as illustrated above, if pulse power feeding of reverse characteristics is performed to the stator 50 from an external power supply circuit, the rotor 30 and the valve shaft 21 are rotationally driven in the other direction, and the valve shaft 21 and the valve holder 23 descend while being rotated via the screw feeding mechanism composed of the female screw hole 15c and the male screw portion 21b.

The outer flange portion 21d descends along with the descent of the valve shaft 21, and the valve holder 23 also descends, such that the first valve element 24 is seated on the valve seat 11e. Thereby, passing through of fluid from the valve chamber VC between the valve seat 11e and the first valve element 24 is prevented.

Further, after the first valve element 24 is seated on the valve seat 11e, the second valve element 25 is pressed downward by the lower end of the valve shaft 21 and is displaced against the urging force of the coil spring 26, by which the lower end of the second valve element 25 abuts on the upper end of the first valve element 24. By having the lower end of the second valve element 25 abut on the upper end of the first valve element 24, frictional force occurs therebetween, such that the rotation of the second valve element 25 is stopped forcibly, whereas the rotation of the valve shaft 21 is continued. In this state, the thrust bearing 27 slide against and ensures a low friction state between the valve shaft 21 and the second valve element 25 being relatively rotated.

By the second valve element 25 closing the upper end of the through hole 24d, fluid is prevented from flowing out of the intermediate chamber MC toward the first piping T1.

In a state where the valve shaft 21 descends to the predetermined position, the valve-closing movable stopper 35 abuts on the valve-closing fixing stopper 55 and is locked thereto, and the rotor 30 and the valve shaft 21 reach the lowermost descended position, such that even if pulse power feeding is continuously performed to the stator 50, the descending of the rotor 30 and the valve shaft 21 is stopped forcibly.

According to the present embodiment, in the valve closed state, the first valve element 24 is seated on the valve seat 11e and the second valve element 25 closes the through hole 24d of the first valve element 24, such that regardless of the influence of contact pressure or deterioration by heat of the O-ring OR, the leaking of fluid from the valve chamber VC to the orifice passage 11d during the valve closed state may be suppressed. Thereby, the O-ring OR having a relatively low contact pressure may be used, and the sliding resistance of the O-ring OR may be reduced, such that the load on the motor during displacement of the valve shaft 21 may be reduced, and the freedom of selection of the O-ring OR may be enhanced.

If fluid leakage from the O-ring OR or the sliding member SD occurs during the valve closed state, fluid within the valve chamber VC moves through the communication holes 23d to the intermediate chamber MC, and the pressure of the intermediate chamber MC becomes equal to the pressure of the valve chamber VC. Therefore, differential pressure between the pressure within the through hole 24d, i.e., low pressure, and pressure within the intermediate chamber MC, i.e., high pressure, will act on the second valve element 25, whereas when the valve is opened, at first, the second valve element 25 opens the through hole 24d, such that the fluid within the intermediate chamber MC moves through the through hole 24d to the orifice passage 11d side within the valve seat member 11. Therefore, the fluid pressure above and below the first valve element 24 is balanced, and no problem occurs when opening the first valve element 24 thereafter.

In the present embodiment, the O-ring OR and the sliding member SD are disposed via the seal holder 29 fixed to the valve main body 10 on an outer side in the radial direction of the valve holder 23, such that the radiuses thereof may be set relatively large. Thereby, the dispersion of contact pressure of the O-ring OR may be suppressed, and even if excessive differential pressure is applied on the O-ring OR and the sliding member SD, damages will not occur easily.

The present invention is not limited to the embodiments described above. For example, the second valve element is composed of a cylindrical member in which a hemispherical portion is formed on the end portion, but alternatively, the second valve element may be formed by fixing a spherical member to an end portion of a cylindrical member. Further, the seal holder 29, the O-ring OR, and the sliding member SD are not necessarily disposed.

The present specification includes the following disclosures of the present invention.

### (First Aspect)

A motorized valve including:
a valve main body including a valve seat, a valve chamber, and an orifice passage;
a valve shaft configured to be rotationally driven by a motor and be displaced in an axial direction;
a valve holder held by the valve shaft;
a first valve element that is fixed to the valve holder and that includes a through hole;
a second valve element that is disposed between the valve shaft and the first valve element;
an elastic body configured to urge the second valve element in a direction away from the first valve element; and
a seal holder including a holder base disposed in the valve main body,
wherein a sealing is provided between an outer periphery of the holder base and an inner periphery of the valve main body,
wherein an annular sealing body is disposed between an inner periphery of the holder base and an outer periphery of the valve holder,
wherein the orifice passage and an inner space of the valve main body are configured to communicate via the through hole in a state where the first valve element is seated on the valve seat inside the valve chamber, and
wherein the through hole is closed in a state where the second valve element abuts on the first valve element.

### (Second Aspect)

The motorized valve according to the first aspect,
wherein, in a state where the valve shaft is displaced toward the valve seat, after the first valve element is seated on the valve seat, the second valve element closes the through hole of the first valve element, and
wherein, in a state where the valve shaft is displaced to an opposite direction as the valve seat, after the second valve element moves away from the first valve element, the first valve element moves away from the valve seat.

### (Third Aspect)

The motorized valve according to the first aspect or the second aspect,
wherein the annular sealing body is composed of an O-ring disposed on the seal holder side, and a sliding member that is disposed on the valve holder side and that has a smaller friction coefficient than that of the O-ring.

### (Fourth Aspect)

The motorized valve according to any one of the first to third aspects,
wherein, in a state where the first valve element is seated on the valve seat, the orifice passage is configured to communicate with an intermediate chamber on an inner side of the valve holder via the through hole, and the annular sealing body provides a sealing between the valve chamber and the intermediate chamber.

### (Fifth Aspect)

The motorized valve according to the fourth aspect,
wherein the intermediate chamber is communicated with a back pressure chamber inside a can in which a rotor of the motor is accommodated.

### (Sixth Aspect)

The motorized valve according to any one of first to fifth aspects,
wherein the second valve element includes a spherical surface configured to block the through hole.

### [Reference Signs List]

1 motorized valve
10 valve main body
11 valve seat member
11e valve seat
15 guide stem
21 valve shaft
23 valve holder
24 first valve element
25 second valve element
26 coil spring
27 thrust bearing
28 washer
29 seal holder
30 rotor
35 valve-closing movable stopper
36 valve-opening movable stopper
50 stator
53 stator coil
55 valve-closing fixing stopper
56 valve-opening fixing stopper
BC back pressure chamber

## Claims

1. A motorized valve comprising:
a valve main body including a valve seat, a valve chamber, and an orifice passage;
a valve shaft configured to be rotationally driven by a motor and be displaced in an axial direction;
a valve holder held by the valve shaft;
a first valve element that is fixed to the valve holder and that includes a through hole;
a second valve element that is disposed between the valve shaft and the first valve element;
an elastic body configured to urge the second valve element in a direction away from the first valve element; and
a seal holder including a holder base disposed in the valve main body,
wherein a sealing is provided between an outer periphery of the holder base and an inner periphery of the valve main body,
wherein an annular sealing body is disposed between an inner periphery of the holder base and an outer periphery of the valve holder,
wherein the orifice passage and an inner space of the valve main body are configured to communicate via the through hole in a state where the first valve element is seated on the valve seat inside the valve chamber, and
wherein the through hole is closed in a state where the second valve element abuts on the first valve element.

2. The motorized valve according to claim 1,
wherein, in a state where the valve shaft is displaced toward the valve seat, after the first valve element is seated on the valve seat, the second valve element closes the through hole of the first valve element, and
wherein, in a state where the valve shaft is displaced to an opposite direction as the valve seat, after the second valve element moves away from the first valve element, the first valve element moves away from the valve seat.

3. The motorized valve according to claim 1,
wherein the annular sealing body is composed of an O-ring disposed on the seal holder side, and a sliding member that is disposed on the valve holder side and that has a smaller friction coefficient than that of the O-ring.

4. The motorized valve according to claim 1,
wherein, in a state where the first valve element is seated on the valve seat, the orifice passage is configured to communicate with an intermediate chamber on an inner side of the valve holder via the through hole, and the annular sealing body provides a sealing between the valve chamber and the intermediate chamber.

5. The motorized valve according to claim 4,
wherein the intermediate chamber is communicated with a back pressure chamber inside a can in which a rotor of the motor is accommodated.

6. The motorized valve according to claim 1,
wherein the second valve element includes a spherical surface configured to block the through hole.
